(19) Europäisches Patentamt
European Patent Office
Office européen des brevets

(11) **EP 3 467 065 A1**

(12) **EUROPEAN PATENT APPLICATION**
published in accordance with Art. 153(4) EPC

(43) Date of publication:
**10.04.2019 Bulletin 2019/15**

(21) Application number: **17802482.4**

(22) Date of filing: **14.04.2017**

(51) Int Cl.:
***C09J 7/02*** *(2006.01)*
***B32B 27/00*** *(2006.01)*
***C09J 11/06*** *(2006.01)*
***C09J 11/08*** *(2006.01)*
***C09J 201/00*** *(2006.01)*

(86) International application number:
**PCT/JP2017/015209**

(87) International publication number:
**WO 2017/203883 (30.11.2017 Gazette 2017/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.05.2016 JP 2016103630**

(71) Applicant: **Nitto Denko Corporation**
**Ibaraki-shi, Osaka 567-8680 (JP)**

(72) Inventors:
- **CHIBA, Mizuho**
  **Ibaraki-shi**
  **Osaka 567-8680 (JP)**
- **SHIMOKITA, Keisuke**
  **Ibaraki-shi**
  **Osaka 567-8680 (JP)**
- **DOI, Asami**
  **Ibaraki-shi**
  **Osaka 567-8680 (JP)**
- **TAKAHASHI, Akiko**
  **Ibaraki-shi**
  **Osaka 567-8680 (JP)**
- **OOTAKE, Hironao**
  **Ibaraki-shi**
  **Osaka 567-8680 (JP)**
- **KOSAKA, Naofumi**
  **Ibaraki-shi**
  **Osaka 567-8680 (JP)**
- **TANI, Kensuke**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**

# (54) PRESSURE-BONDING PRESSURE-SENSITIVE ADHESIVE MEMBER

(57) Provided is a pressure-bonding adhesive member having a superior positional-adjustment function relative to an adherend having a surface mainly constituted of low-polarity plastic typified by polypropylene, and capable of adhering to the adherend with a sufficiently high adhesive force after positional adjustment.

A pressure-bonding adhesive member 1 containing an adhesive layer 11 and plural convex parts 12 formed on one surface of the adhesive layer 11, wherein, when the convex parts 12 are in contact with a polypropylene plate and the adhesive layer 11 is not in contact with the polypropylene plate, the adhesive member 1 shows a frictional force of not more than 0.6N/cm$^2$ on the polypropylene plate and a shear adhesive force of not less than 50N/cm$^2$ to the polypropylene plate.

EP 3 467 065 A1

Fig. 1

1
12
11A
11
11B
10
13

## Description

[Technical Field]

The present invention relates to a pressure-bonding adhesive member, particularly, a pressure-bonding adhesive member simultaneously achieving a superior positional-adjustment function and strong adhesion after positional adjustment relative to an adherend containing low-polarity plastic such as polypropylene and the like as a main component.

[Background Art]

Conventionally, pressure-bonding adhesive members are known (e.g., patent documents 1 - 3 etc.). The pressure-bonding adhesive member is an adhesive member in which a non-adhesive or slightly adhesive convex part is partially provided on the surface of the adhesive layer (hereinafter "non-adhesive" and "slightly adhesive" are collectively referred to as "low-adhesive"). When the adhesive member is placed on the surface of an adherend without pressing, the low-adhesive convex part abuts against the surface of the adherend, and the adhesive layer hardly contacts the surface of the adherend. Thus, the adhesive member can be moved on the surface of the adherend, whereby the positional adjustment of the adhesive member can be performed. After positional adjustment, when the adhesive member is pressed, the low-adhesive convex part is embedded in the adhesive layer, the adhesive layer contacts the adherend to express an adhesive force. As a result, the adhesive member can be adhered to the intended position on the adherend.

The applicant of the present application has already proposed a pressure-bonding adhesive member that affords a sufficiently high adhesive force in pressure bonding after positional adjustment relative to an adherend, particularly when the adherend is a metal. When the aforementioned convex part is in contact with an adherend surface (surface of stainless-steel plate), this pressure-bonding adhesive member characteristically shows a frictional force of not more than 0.4N/cm$^2$ on the stainless-steel plate, and a shear adhesive force of not less than 45N/cm$^2$ to the stainless-steel plate. However, such pressure-bonding adhesive member does not easily adhere with a sufficiently high adhesive force to an adherend made of low-polarity plastic typified by polypropylene.

[Document List]

[Patent documents]

patent document 1: JP-A-01-118584
patent document 2: JP-A-2010-215900
patent document 3: JP-A-2001-279200

[SUMMARY OF THE INVENTION]

[Problems to be Solved by the Invention]

The present invention has been made in view of the above-mentioned situation and aims to provide a pressure-bonding adhesive member having a superior positional-adjustment function relative to an adherend having a surface mainly constituted of low-polarity plastic typified by polypropylene, and capable of adhering to the adherend after positional adjustment with a sufficiently high adhesive force.

[Means of Solving the Problems]

The present inventors have conducted intensive studies in an attempt to solve the above-mentioned problems and found that a pressure-bonding adhesive member having an adhesive layer and plural convex parts formed on one surface thereof wherein, when the convex parts are in contact with a polypropylene plate and the adhesive layer is not in contact with the polypropylene plate, the adhesive member has a frictional force of not more than 0.6N/cm$^2$ on the polypropylene plate, and a shear adhesive force of not less than 50N/cm$^2$ to the polypropylene plate can provide a pressure-bonding adhesive member having a superior positional-adjustment function to an adherend containing low-polarity plastic typified by polypropylene as a main component, and capable of adhering to the adherend with a sufficiently high adhesive force after positional adjustment, which resulted in the completion of the present invention. Accordingly, the present invention provides the following.

[1] A pressure-bonding adhesive member comprising an adhesive layer and plural convex parts formed on one surface of the adhesive layer, wherein
when the convex parts are in contact with a polypropylene plate and the adhesive layer is not in contact with the polypropylene plate, the adhesive member shows a frictional force of not more than 0.6N/cm$^2$ on the polypropylene plate and a shear adhesive force of not less than 50N/cm$^2$ to the polypropylene plate.
[2] The pressure-bonding adhesive member of the above-mentioned [1], wherein the convex part comprises a (meth)acrylic copolymer particle and a tackifier.
[3] The pressure-bonding adhesive member of the above-mentioned [2], wherein the tackifier comprises a rosin tackifier.
[4] The pressure-bonding adhesive member of the above-mentioned [2] or [3], wherein the tackifier is solid at ordinary temperature.
[5] The pressure-bonding adhesive member of the above-mentioned [4], wherein the tackifier has a softening temperature of not less than 40°C.
[6] The pressure-bonding adhesive member of any one of the above-mentioned [2] to [5], wherein the (meth)acrylic copolymer particle is a core-shell (meth)acrylic copolymer particle comprising a core and a shell having a higher elastic modulus than that of the core.
[7] The pressure-bonding adhesive member of the above-mentioned [6], wherein the core is a (meth)acrylic copolymer comprising an alkyl acrylate wherein the alkyl group is a $C_{6-10}$ alkyl group as a main monomer unit.
[8] The pressure-bonding adhesive member of any one of the above-mentioned [1] to [7], wherein a ratio of a thickness of the adhesive layer to a height of the convex part (thickness of adhesive layer/height of convex part) is not less than 1.0.
[9] The pressure-bonding adhesive member of any one of the above-mentioned [1] to [8], wherein the convex part has a projection height of not less than 1 $\mu$m and not more than 100 $\mu$m from a surface of the adhesive layer.
[10] The pressure-bonding adhesive member of any one of the above-mentioned [1] to [9], wherein the convex part has an elastic modulus of not less than 5 MPa.
[11] The pressure-bonding adhesive member of any one of the above-mentioned [1] to [10], wherein the convex part has an elastic modulus higher than the elastic modulus of the adhesive layer.
[12] A method for producing a pressure-bonding adhesive member comprising an adhesive layer and plural convex parts formed on one surface of the adhesive layer, wherein
when the convex part is in contact with a polypropylene plate and the adhesive layer is not in contact with the polypropylene plate, the adhesive member shows a frictional force of not more than 0.6N/cm$^2$ on the polypropylene plate and a shear adhesive force of not less than 50N/cm$^2$ to the polypropylene plate, the method comprising forming a convex part comprising a (meth)acrylic copolymer particle and a tackifier on one surface of the adhesive layer by applying a liquid comprising a (meth)acrylic copolymer emulsion and a tackifier which is solid at ordinary temperature to one surface of the adhesive layer and drying same at 60 - 150°C.
[13] The method of the above-mentioned [12], wherein the tackifier comprises a rosin tackifier.
[14] The method of the above-mentioned [12], wherein the tackifier has a softening temperature of not less than 40°C.
[15] The method of any one of the above-mentioned [12] to [14], wherein the (meth)acrylic copolymer emulsion is an emulsion comprising a core-shell (meth)acrylic copolymer particle comprising a core and a shell having a higher elastic modulus than that of the core.
[16] The method of the above-mentioned [15], wherein the core is a (meth)acrylic copolymer comprising an alkyl acrylate wherein the alkyl group is a $C_{6-10}$ alkyl group as a main monomer unit.

In the present specification, the "(meth)acrylic" means both "acrylic" and "methacrylic". Generally, a dispersing liquid wherein a dispersoid and a dispersion medium are liquids is called an "emulsion", and a dispersing liquid wherein a dispersoid is a solid and a dispersion medium is a liquid is called a "dispersion". The "(meth)acrylic copolymer emulsion" in the present invention refers to a dispersion wherein (meth)acrylic copolymer particles (solid) produced by emulsion polymerization of two or more kinds of (meth)acrylic monomers are directly dispersed in the aqueous dispersion medium used for emulsion polymerization. Similarly, the "core-shell copolymer emulsion" refers to a dispersion wherein core-shell copolymer particles (solid) are dispersed in the aqueous dispersion medium used for emulsion polymerization for producing core-shell copolymer particles as (meth)acrylic copolymer particles. In addition, "$C_{x-y}$" means that the carbon number is not less than x and not more than y (x and y are numbers).

[Effect of the Invention]

According to the present invention, a pressure-bonding adhesive member having a superior positional-adjustment function relative to an adherend having a surface mainly composed of low-polarity plastic typified by polypropylene, and capable of adhering to the adherend after positional adjustment with a sufficiently high adhesive force can be realized.

[Brief Description of the Drawings]

Fig. 1 is a schematic perspective view of the pressure-bonding adhesive member of one embodiment of the present invention.
Fig. 2 is a schematic sectional view of changes in the pressure-bonding adhesive member of the present invention during an operation to apply the member to the adherend.
Fig. 3 is a plan view of the pressure-bonding adhesive member of one embodiment of the present invention.
Fig. 4 is a schematic sectional view of the convex part.
Fig. 5 is a schematic view of the internal structure of the core-shell (meth)acrylic copolymer particle.
Fig. 6 is a schematic side view of the pressure-bonding adhesive member with a separator of the present invention.
Fig. 7 is a view explaining the measurement method of the frictional force of the pressure-bonding adhesive member on a polypropylene plate.
Fig. 8 is a view explaining the measurement method of the shear adhesive force of the pressure-bonding adhesive member to a polypropylene plate.
Fig. 9 is a view explaining the measurement method of the elastic modulus of the adhesive layer and the convex part.

[Description of Embodiments]

The present invention is more specifically explained in the following by referring to preferable embodiments thereof.

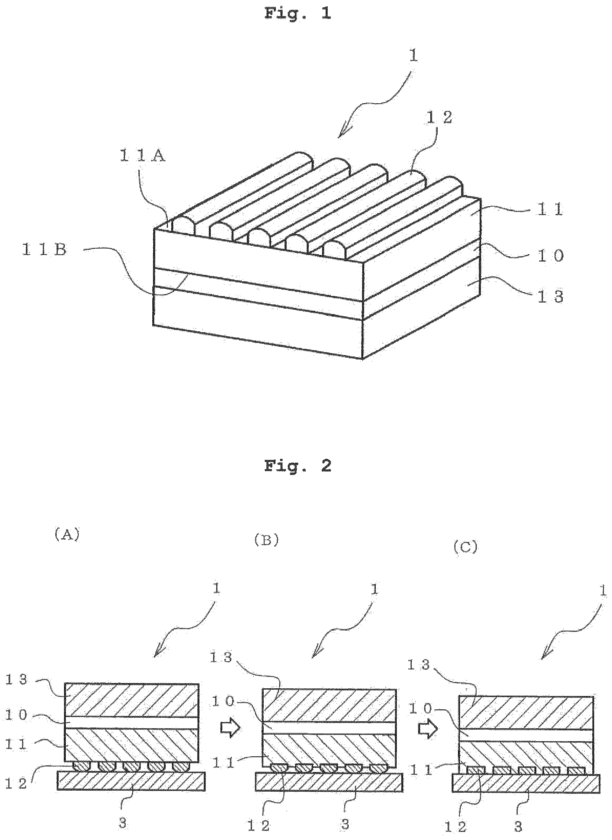

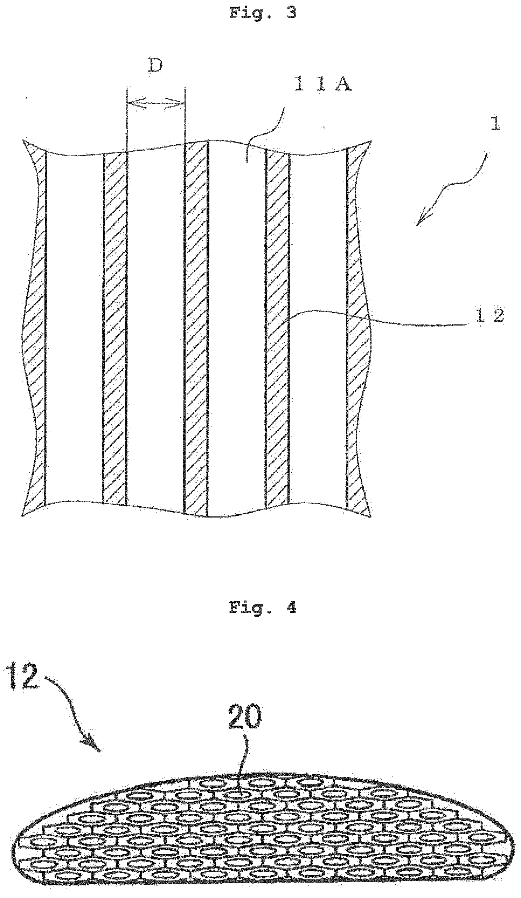

Fig. 1 is a schematic perspective view of the pressure-bonding adhesive member of one embodiment of the present invention, and Fig. 3 is a plan view thereof.

The pressure-bonding adhesive member of the present invention (hereinafter sometimes to be also simply abbreviated as "adhesive member") is mainly characterized in that it has, as shown by the pressure-bonding adhesive member 1 in one embodiment, an adhesive layer 11 and plural convex parts 12 formed on one surface 11A of the adhesive layer 11, and that when the convex part 12 is in contact with a polypropylene plate (hereinafter to be also abbreviated as "PP plate") and the adhesive layer 11 is not in contact with the PP plate, the adhesive member 1 shows a frictional force of not more than 0.6N/cm$^2$ on the PP plate and a shear adhesive force of not less than 50N/cm$^2$ to the PP plate.

As used herein, the frictional force on the PP plate and the shear adhesive force to the PP plate are values measured by the below-mentioned tests (1. frictional force measurement test, 2. shear adhesive force measurement test).

The frictional force on the PP plate is, as is clear from the test method mentioned below, the PP plate is regarded an adherend, and the frictional force acting on the pressure-bonding adhesive member moving on the adherend when adjusting the position of the pressure-bonding adhesive member on the adherend is measured. The shear adhesive force to the PP plate is, as is clear from the test method mentioned below, the PP plate is regarded an adherend, and the adhesive force between the adherend and the pressure-bonding adhesive member when the pressure-bonding adhesive member is press bonded to the adherend is evaluated by shear adhesive force.

Fig. 2 is a schematic cross-sectional view of the pressure-bonding adhesive member 1 and the adherend 3, which explains changes in the pressure-bonding adhesive member 1 of Fig. 1 during an operation to apply the member to the adherend 3. The pressure-bonding adhesive member 1 of the present invention has a plurality of convex parts 12 formed on one surface of the adhesive layer 11. Therefore, when the pressure-bonding adhesive member 1 is placed on the adherend 3 (state free of pressure), as shown in Fig. 2 (A), the convex part 12 abuts the adherend 3, and the pressure-bonding adhesive member 1 can easily move on the adherend 3 since the adhesive layer 11 does not substantially contact the adherend 3. When the pressure-bonding adhesive member 1 placed on the adherend 3 is pressed with a weak pressure, as shown in Fig. 2 (B), the convex parts 12 are partly embedded in the adhesive layer 11. Thus, the adherend 3 contacts a part of the adhesive layer 11 while the convex parts 12 are exposed from the surface of the adhesive layer 11 (in Fig. 2 (B), the contact region between adhesive layer 11 and adherend 3 is not shown). As a result, the pressure-bonding adhesive member 1 adheres to the adherend 3 with a low adhesive force. Therefore, after the pressure-bonding adhesive member 1 is temporarily fixed to the adherend 3 by pressing same with a weak pressure (after the pressure-bonding adhesive member is adhered with a low adhesive force), the pressure-bonding adhesive member 1 can be easily detached from the adherend 3. After detachment, the convex parts 12 are exposed and the pressure-bonding adhesive member 1 can be comparatively easily moved on the surface of the adherend 3. Fig. 2 (C) shows the state when the pressure-bonding adhesive member 1 is adhered to the adherend 3 by applying a sufficient pressure on the pressure-bonding adhesive member 1 placed on the surface of the adherend 3. As shown in Fig. 2 (C), due to the sufficient pressure applied to the pressure-bonding adhesive member 1, almost all of the convex parts 12 are embedded in the adhesive layer 11 and the pressure-bonding adhesive member 1 is adhered to the adherend 3 with a sufficient adhesive force.

In the present invention, adherend 3 has a surface mainly constituted of low-polarity plastic typified by polypropylene. Examples of the low-polarity plastic include polypropylene, polyethylene, polystyrene, ABS (acrylonitrile-styrene-butadiene copolymer resin) and the like. The "surface mainly constituted of low-polarity plastic" means that the constitution ratio of the low-polarity plastic relative to the whole surface of the adherend is within the range of 50 - 100 wt%.

In the pressure-bonding adhesive member 1 of the present invention, when the frictional force on the polypropylene plate exceeds 0.6N/cm$^2$, the pressure-bonding adhesive member 1 cannot move easily on the adherend 3, and the positional-adjustment function is decreased. The frictional force on the polypropylene plate is preferably not more than 0.5N/cm$^2$, more preferably not more than 0.45N/cm$^2$, further preferably not more than 0.40N/cm$^2$. On the other hand, when the shear adhesive force to the polypropylene plate is less than 50N/cm$^2$, adhesion to the adherend 3 with a sufficiently high adhesive force becomes difficult. The shear adhesive force to the polypropylene plate is preferably not less than 60N/cm$^2$, more preferably not less than 70N/cm$^2$.

As shown in Fig. 1, the pressure-bonding adhesive member 1 of the present invention typically has a support 10 on one surface 11B on the side opposite to one surface 11A on which convex parts 12 of an adhesive layer 11 are formed. The support 10 increases the rigidity of the whole pressure-bonding adhesive member 1 and positional adjustment work on the adherend is facilitated. The support 10 is not particularly limited. Specific examples include resin films (including single layer films and multi-layer films) formed from one or more kinds of resins selected from the group consisting of polyester (e.g., polyethylene terephthalate (PET) etc.), nylon, saran (trade name), polyvinyl chloride, polyethylene, polypropylene, ethylene-vinyl acetate copolymer, polytetrafluoroethylene, and ionomer resin, metal foil, a laminate film of a resin film and metal foil, and the like. The thickness of the support 10 is not particularly limited and is preferably about 10 - 1000 $\mu$m.

The pressure-bonding adhesive member 1 of Fig. 1 further has an adhesive layer 13 on one surface on the side opposite to the support 10 in contact with the adhesive layer 11. Such adhesive layer 13 is used to adhere, for example, exterior or interior building materials such as decorative sheet (designed sheet) for exterior or interior decoration of building, wall paper, flooring material, carpet, ceiling material, base board, cushion floor, straw mat, sash and the like. When such adhesive layer 13 is present, a release-treated protection film (not shown) may be laid on the adhesive layer 13 during storage and transportation of the pressure-bonding adhesive member 1.

The pressure-bonding adhesive member of the present invention may be a member free of an adhesive layer 13 and having only a support 10 on one surface 11B on the side opposite to one surface 11A on which convex parts 12 of an adhesive layer 11 are formed. When the member has such constitution, the surface of the support 10 may be designed by printing or coating the surface on the opposite side from the adhesive layer 11 of the support 10, or adhering a designed film onto the surface or the like, whereby the pressure-bonding adhesive member 1 can be used as it is as an exterior or interior building material (decorative laminate, wall paper, flooring material, carpet, ceiling material, base board, cushion floor, straw mat, sash etc.).

When a release treatment is applied to the support 10 at the side adjacent to the adhesive layer 11 (that is, support 10 is a release liner), one surface 11B on the side opposite to one surface 11A on which the convex parts 12 of the adhesive layer 11 are formed can be used as an adhesive surface to which exterior or interior building materials (decorative laminate, wall paper, flooring material, carpet, ceiling material, base board, cushion floor, straw mat, sash etc.) are adhered.

[Convex part]

In the pressure-bonding adhesive member 1 of the present invention, plural convex parts 12 formed on one surface 11A of the adhesive layer 11 need to have no tackiness or low tackiness until the pressure-bonding adhesive member 1 is press-adhered to the adherend 3 to set the frictional force of the pressure-bonding adhesive member 1 on the PP plate to 0.6N/cm$^2$ or below. However, when the pressure-bonding adhesive member 1 is press-adhered to the adherend 3, the convex part 12 is not completely embedded in the adhesive layer 11 and not only the adhesive layer 11 but also convex parts 12 form an adhesive surface with the adherend 3. Thus, to improve the adhesive force of the pressure-bonding adhesive member 1 to the adherend 3, the convex parts 12 desirably express comparatively high tackiness when the pressure-bonding adhesive member 1 is pressed against the adherend 3.

Examples of such convex part 12 include a convex part containing (meth)acrylic copolymer particles and a tackifier, and obtained by applying and drying a liquid of a mixture of a (meth)acrylic copolymer emulsion and a tackifier which is solid at ordinary temperature to one surface of the adhesive layer 11. Fig. 4 shows the section of the convex part and, in convex part 12, (meth)acrylic copolymer particles 20 derived from (meth)acrylic copolymer emulsion are present as an aggregate wherein the tackifier (not shown) is dissolved or partially attached to the particles. When (meth)acrylic copolymer emulsion is mixed with a liquid tackifier at ordinary temperature, the convex part 12 tends to have a comparatively high tackiness before pressing the adhesive member 1 against the adherend 3, and the positional-adjustment function of the adhesive member 1 relative to the adherend 3 sometimes decreases. This is considered to be attributable to an increase in the proportion of the tackifier present on the outer surface of the aggregate of the (meth)acrylic copolymer particle.

For application of the above-mentioned liquid of a mixture of a (meth)acrylic copolymer emulsion and a tackifier which is solid at ordinary temperature to one surface 11A of the adhesive layer 11, for example, a method of adding dropwise the above-mentioned liquid using a dispenser, a method of transcribing the above-mentioned liquid on one surface of the adhesive layer 11 by a gravure roll with a carved formation pattern, other general printing techniques such as screen printing, offset printing, flexographic printing and the like can be used.

Tackifier is not particularly limited as long as it is solid at ordinary temperature. Examples thereof include terpene tackifier, terpene phenol tackifier, rosin tackifier, styrene tackifier (e.g., styrene resin, poly($\alpha$-methylstyrene) and the like) and the like, and rosin tackifier is preferable. Examples of the rosin tackifier include unmodified rosin (natural rosin) such as gum rosin, wood rosin, tall oil rosin and the like, modified rosin (disproportionated rosin and polymerized rosin, and other chemically-modified rosin etc.) obtained by modifying by disproportionation, polymerization and the like, various rosin derivatives and the like. Examples of the rosin derivative include rosin esters such as rosin ester obtained by esterifying unmodified rosin with alcohols, modified rosin ester obtained by esterifying modified rosin such as hydrogenated rosin, disproportionated rosin, polymerized rosin or the like with alcohols, and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid-modified rosin esters obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins such as unmodified rosin, modified rosin, various rosin derivatives and the like (particularly, rosin esters); and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used. Examples of the alcohols to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexahydric alcohols such as dipentaerythritol etc. and the like.

From the aspect of adhesiveness to an adherend (low-polarity plastic), a tackifier having a softening temperature of not less than 40°C is preferable, a tackifier having a softening temperature of not less than 50°C is more preferable, a tackifier having a softening temperature of not less than 60°C is still more preferable, a tackifier having a softening temperature of not less than 80°C is particularly preferable, and a tackifier having a softening temperature of not less than 95°C is most preferable. From the aspect of adhesiveness at low temperature, a tackifier having a softening temperature of not more than 200°C is preferable, and a tackifier having a softening temperature of not more than 160°C is more preferable. The softening temperature as used herein refers to a ring and ball softening temperature Ts measured according to JIS K 2207 ring and ball softening point (temperature) test method and using a constant-load extrusion type capillary rheometer (SHIMADZU flow tester CFT-500D) and a value measured under the conditions of die: 1 mm$\times$1 mm, load: 4.9N, sound-rising rate: 5°C/min.

A (meth)acrylate oligomer (AO) can also be preferably used as a tackifier. Such (meth)acrylate oligomer (AO) is preferably a polymer containing not less than 50 wt%, more preferably 80 wt% - 100 wt%, of (meth)acrylate (a) having Tg (glass transition temperature) of not less than 15°C as a monomer unit. One or more kinds of (meth)acrylates (a) can be used. A polymer containing less than 50 wt% of (meth)acrylate (a) as a monomer unit is not preferable since it cannot improve adhesiveness to low-polarity plastic sufficiently.

As Tg of (meth)acrylate, the numerical values described in POLYMER HANDBOOK FOURTH EDITION are adopted. A (meth)acrylate (a) having Tg of not less than 15°C preferably has Tg of not less than 30°C, more preferably not less than 50°C, from the aspect of adhesiveness to low-polarity plastic. The Tg is preferably not more than 300°C, more preferably not more than 250°C.

The content of the monomer unit of (meth)acrylate (a) having Tg of not less than 15°C in the (meth)acrylate oligomer (AO) is preferably not less than 80 wt%, more preferably 80 wt% - 100 wt%, of the whole oligomer.

The (meth)acrylate (a) having Tg of not less than 15°C is more preferably (meth)acrylate (a1) having a solubility parameter (SP value) of the homopolymer of not more than 21.5 ($MPa^{1/2}$). One or more kinds of the (meth)acrylates (a1) can be used. The (meth)acrylate oligomer (AO) is more preferably a polymer containing not less than 50 wt%, further preferably not less than 80 wt%, particularly preferably 80 wt% - 100 wt%, of (meth)acrylate (a1) as a monomer unit.

The solubility parameter (SP value) here is calculated by the method described in R.T. Fedors, Polymer Engineering and Science, 14, 147(1974). The solubility parameter (SP value) of the (meth)acrylate (a1) is preferably not more than 21.3 ($MPa^{1/2}$), further preferably not more than 21.0 ($MPa^{1/2}$), from the aspect of adhesiveness to low-polarity plastic. When the solubility parameter is too small, compatibility with (meth)acrylic copolymer particles becomes low. Thus, the solubility parameter is not less than 18.0 ($MPa^{1/2}$), further preferably not less than 18.5 ($MPa^{1/2}$).

The (meth)acrylate oligomer (AO) more preferably has a weight average molecular weight of 2000 - 10000 from the aspect of adhesiveness to low-polarity plastic. When the weight average molecular weight is less than 1000, the effect of improving adhesiveness to low-polarity plastic becomes poor. On the other hand, when the weight average molecular weight exceeds 30000, the (meth)acrylate oligomer tends to show layer separation, and adhesiveness performance and appearance are adversely influenced in some cases.

The weight average molecular weight can be measured based on polystyrene by GPC method. To be specific, two columns of "TSKgelGMH-H(20)" are connected to "HPLC8020" manufactured by Tosoh Corporation and measurement is performed under the conditions of flow rate 0.5 ml/min in a tetrahydrofuran solvent.

Specific examples of (meth)acrylate (a1) include t-butyl acrylate (Tg: 43°C, SP value: 19.2 ($MPa^{1/2}$)), 3,3,5-trimethylcyclohexyl acrylate (Tg: 15°C, SP value: 19.1 ($MPa^{1/2}$)), isobornyl acrylate (Tg: 94°C, SP value: 19.7 ($MPa^{1/2}$)), methyl methacrylate (Tg: 105°C, SP value: 20.3 ($MPa^{1/2}$)), ethyl methacrylate (Tg: 65°C, SP value: 19.9 ($MPa^{1/2}$)), cyclohexyl methacrylate (Tg: 83°C, SP value: 20.1 ($MPa^{1/2}$)), isobutyl methacrylate (Tg: 53°C, SP value: 19.0 ($MPa^{1/2}$ )), t-butyl methacrylate (Tg: 118°C, SP value: 18.6 ($MPa^{1/2}$)) and the like.

The (meth)acrylate oligomer (AO) can contain (meth)acrylate having Tg of less than 15°C as a monomer unit. The (meth)acrylate having Tg of less than 15°C preferably has Tg of not less than -55°C.

In the present invention, one or more kinds of tackifiers can be used.

The (meth)acrylic copolymer particles (i.e., (meth)acrylic copolymer particles derived from (meth)acrylic copolymer emulsion) constituting the convex part 12 is preferably a copolymer containing at least alkyl (meth)acrylate as a monomer unit. The alkyl (meth)acrylate is preferably alkyl (meth)acrylate wherein the alkyl group is a linear, branched chain or cyclic alkyl group having 1 - 14 carbon atoms ($C_{1-14}$ alkyl group) (i.e., "$C_{1-14}$ alkyl (meth) acrylate") . Examples of the $C_{1-14}$ alkyl (meth) acrylate include, but are not particularly limited to, methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate. Of these, alkyl (meth)acrylate having linear or branched chain alkyl group having 1 - 12 carbon atoms ($C_{1-12}$ alkyl group) (i.e., "$C_{1-12}$ alkyl (meth)acrylate") is preferable, and alkyl (meth)acrylate having linear or branched chain alkyl group having 1 - 10 carbon atoms ($C_{1-10}$ alkyl group) (i.e., "$C_{1-10}$ alkyl (meth)acrylate") is more preferable. One or more kinds of alkyl (meth)acrylates can be used.

The (meth)acrylic copolymer particles can contain, as a monomer unit besides alkyl (meth)acrylate, carboxy group-containing monomers such as acrylic acid, methacrylic acid, carboxyethyl acrylate, carboxypentyl acrylate, itaconic acid, maleic acid, fumaric acid, crotonic acid and the like, and/or hydroxy group-containing monomers such as hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like. As the carboxy group-containing monomer, acrylic acid and methacrylic acid are preferable, and as the hydroxy group-containing monomer, hydroxyethyl acrylate and hydroxybutyl acrylate are preferable. One or more kinds each of the carboxy group-containing monomers and hydroxy group-containing monomers can be used.

The (meth)acrylic copolymer particle is preferably a copolymer containing alkyl (meth)acrylate and carboxyl group-containing monomer as monomer unit.

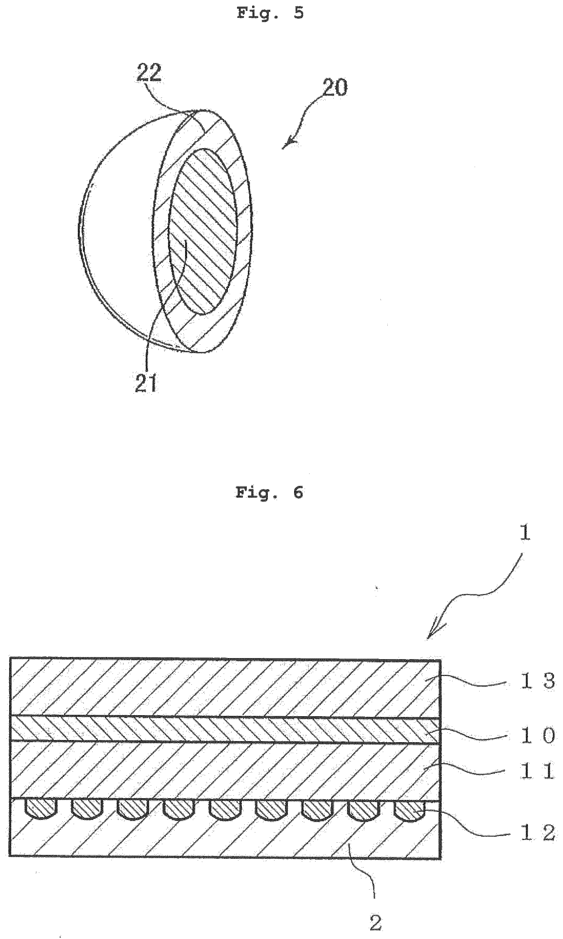

The (meth)acrylic copolymer particle is preferably a core-shell (meth)acrylic copolymer particle 20 having a core 21 and a shell 22 having elastic modulus higher than that of the core 21 shown in Fig. 5. When the elastic modulus of shell 22 is higher than the elastic modulus of core 21, low friction of the convex part 12 is improved, frictional force of adhesive member 1 on adherend 3 becomes smaller, and the positional-adjustment function of the adhesive member 1 is improved more.

In core-shell (meth)acrylic copolymer particles 20, it is preferable that core 21 is constituted of copolymer (A1) containing alkyl acrylate and carboxy group-containing monomer as main monomer units and shell 22 is constituted of copolymer (A2) containing alkyl methacrylate and carboxy group-containing monomer.

Alkyl acrylate in copolymer (A1) is preferably alkyl acrylate wherein the alkyl group is an alkyl group having 6-10 carbon atoms ($C_{6-10}$ alkyl group) (i.e., "$C_{6-10}$ alkyl acrylate"), more preferably, 2-ethylhexyl acrylate, isononyl acrylate or hexyl acrylate. The carboxy group-containing monomer is preferable acrylic acid or methacrylic acid, and acrylic acid is more preferable. In addition, copolymer (A1) preferably contains 60 - 100 wt%, more preferably 70 - 99.9 wt%, further preferably 80 - 99 wt%, particularly preferably 80 - 98 wt% of alkyl acrylate in the total monomer units. As the specific examples of copolymer (A1) having preferable composition, for example, a copolymer of alkyl acrylate (80 - 98 wt%)/carboxy group-containing monomer (2 - 20 wt%) can be mentioned.

The alkyl methacrylate in copolymer (A2) is preferably alkyl methacrylate wherein the alkyl group is an alkyl group having 1 - 18 carbon atoms ($C_{1-18}$ alkyl group) (i.e., "$C_{1-10}$ alkyl methacrylate"), more preferably, methyl methacrylate, ethyl methacrylate, or cyclohexyl methacrylate. The carboxy group-containing monomer is preferably acrylic acid. The copolymer (A2) preferably contains 60 - 100 wt%, more preferably 70 - 99.9 wt%, further preferably 80 - 99 wt%, particularly preferably 80 - 98 wt% of alkyl methacrylate in the total monomer units. As the specific example of copolymer (A2) having preferable composition, for example, a copolymer of alkyl methacrylate (80 - 99 wt%)/carboxy group-containing monomer (1 - 20 wt%) can be mentioned.

In the core-shell (meth)acrylic copolymer particles 20, a core-shell ratio which is a constituent weight ratio (core/shell) of core 21 and shell 22 is preferably 10 - 90/90-10, more preferably 10 - 80/90 - 20. When the core-shell ratio exceeds such preferable range and the ratio of the core is higher (ratio of shell is smaller), the positional-adjustment function tends to decrease. When the ratio of core is smaller (ratio of shell is higher), the pressure adhesiveness tends to decrease.

In the present invention, the content ratio of the (meth)acrylic copolymer particles and the tackifier in the convex part 12 is preferably 100:5 - 50, more preferably 100:5 - 30, in a weight ratio ((meth)acrylic copolymer particles:tackifier).

In the present invention, the (meth)acrylic copolymer emulsion to be the source of the (meth)acrylic copolymer particles constituting the convex part 12 can be obtained by a conventional method, emulsion polymerization. That is, it is obtained by blending a monomer to be the monomer unit of the aforementioned (meth)acrylic copolymer particles and emulsifier (surfactant), radical polymerization initiator, chain transfer agent as necessary and the like as appropriate and performing emulsion polymerization by, for example, a known emulsion polymerization method such as collectively adding method (collectively polymerizing method), monomer-dropping method, monomer emulsion-dropping method or the like. In the monomer-dropping method, continuous dropping or divisional dropping is selected as appropriate. Known emulsion polymerization methods can be combined as appropriate. The reaction conditions and the like are appropriately selected. The polymerization temperature is preferably, for example, about 40 - 95°C and the polymerization time is preferably about 30 min - 24 hr.

When core-shell (meth)acrylic copolymer particles are obtained, multi-step emulsion polymerization is performed which includes emulsion polymerization to form a copolymer to be the core of the core-shell (meth)acrylic copolymer particles, and emulsion polymerization to produce a copolymer to be the shell which is performed in the presence of the produced copolymer to be the core. Each emulsion polymerization can be performed according to a conventional method, and the aforementioned method and conditions can be adopted.

As the above-mentioned emulsifier, various unreactive surfactants generally used for emulsion polymerization are used. Examples of the unreactive surfactant include anionic unreactive surfactant and nonionic unreactive surfactant. Specific examples of the anionic unreactive surfactant include higher fatty acid salts such as sodium oleate and the like; alkylaryl sulfonates such as sodium dodecylbenzenesulfonate and the like; alkyl sulfate salts such as sodium lauryl sulfate, ammonium lauryl sulfate and the like; polyoxyethylene alkyl ether sulfate salts such as sodium polyoxyethylene lauryl ether sulfate and the like; polyoxyethylene alkylaryl ether sulfate salts such as sodium polyoxyethylene nonylphenyl ether sulfate and the like; alkyl sulfosuccinate salts and a derivative thereof such as sodium monooctyl sulfosuccinate, sodium dioctyl sulfosuccinate, sodium polyoxyethylene lauryl sulfosuccinate and the like; polyoxyethylene distyrenated phenyl ether sulfate salts and the like. Specific examples of the nonionic unreactive surfactant include polyoxyethylene alkyl ethers such as polyoxyethylene lauryl ether, polyoxyethylene stearyl ether and the like; polyoxyethylene alkylphenyl ethers such as polyoxyethylene octylphenyl ether, polyoxyethylene nonylphenyl ether and the like; sorbitan higher fatty acid esters such as sorbitan monolaurate, sorbitan monostearate, sorbitan trioleate and the like; polyoxyethylene sorbitan higher fatty acid esters such as polyoxyethylene sorbitan monolaurate and the like; polyoxyethylene higher fatty acid esters such as polyoxyethylene monolaurate, polyoxyethylene monostearate and the like; glycerol higher fatty acid esters such as oleic acid monoglyceride, stearic acid monoglyceride and the like; polyoxyethylene-polyoxypropylene-block copolymer, polyoxyethylene distyrenated phenyl ether and the like.

In addition to the above-mentioned unreactive surfactants, reactive surfactants having a radical polymerizable functional group related to an ethylenic unsaturated double bond can be used as the surfactant. Examples of the reactive surfactant include radical polymerizable surfactants such as anionic reactive surfactants and nonionic reactive surfactants in which radical polymerizable functional groups (radical reactive groups) such as propenyl group, allyl ether group and the like are introduced into the aforementioned anionic unreactive surfactants and nonionic unreactive surfactants, and the like. Radical polymerizable surfactants are preferably used from the aspects of stability of aqueous dispersing liquid and durability of the adhesive layer.

Specific examples of the anionic reactive surfactant include, alkyl ethers (examples of the commercially available product include AQUALON KH-05, KH-10, KH-20 manufactured by DKS Co. Ltd., ADEKA REASOAP SR-10N, SR-20N manufactured by Asahi Denka Co., Ltd., LATEMUL PD-104 manufactured by Kao Corporation, etc.); sulfosuccinates (examples of the commercially available product include LATEMUL S-120, S-120A, S-180P, S-180A manufactured by Kao Corporation, ELEMINOL JS-20 manufactured by Sanyo Chemical Industries, Ltd., etc.); alkylphenyl ethers or alkylphenyl esters (examples of the commercially available product include AQUALON H-2855A, H-3855B, H-3855C, H-3856, HS-05, HS-10, HS-20, HS-30, BC-05, BC-10, BC-20 manufactured by DKS Co. Ltd., ADEKA REASOAP SDX-222, SDX-223, SDX-232, SDX-233, SDX-259, SE-10N, SE-20N manufactured by Asahi Denka Co., Ltd.); (meth)acrylate sulfates (examples of the commercially available product include Antox MS-60, MS-2N manufactured by Nippon Nyukazai Co., Ltd., ELEMINOL RS-30 manufactured by Sanyo Chemical Industries, Ltd., etc.); phosphates (examples of the commercially available product include H-3330PL manufactured by DKS Co. Ltd., ADEKA REASOAP PP-70 manufactured by Asahi Denka Co., Ltd., etc.). Examples of the nonionic reactive surfactant include alkyl ethers (examples of the commercially available product include ADEKA REASOAP ER-10, ER-20, ER-30, ER-40 manufactured by Asahi Denka Co., Ltd., LATEMUL PD-420, PD-430, PD-450 manufactured by Kao Corporation, etc.); alkylphenyl ethers or alkylphenyl esters (examples of the commercially available product include AQUALON RN-10, RN-20, RN-30, RN-50 manufactured by DKS Co. Ltd., ADEKA REASOAP NE-10, NE-20, NE-30, NE-40 manufactured by Asahi Denka Co., Ltd., etc.); (meth)acrylate sulfates (examples of the commercially available product include RMA-564, RMA-568, RMA-1114 manufactured by Nippon Nyukazai Co., Ltd., etc.).

In the present invention, one or more kinds of emulsifiers (surfactants) can be used.

The above-mentioned radical polymerization initiator is not particularly limited, and known radical polymerization initiators generally used for emulsion polymerization are used. Examples thereof include azo initiators such as 2,2'-azobisisobutyronitrile, 2, 2'-azobis(2-methylpropionamidine) disulfate, 2,2'-azobis(2-methylpropionamidine) dihydrochloride, 2,2'-azobis(2-amidinopropane) dihydrochloride, 2,2'-azobis[2-(2-imidazolin-2-yl)propane] dihydrochloride and the like; persulfate initiators such as potassium persulfate, ammonium persulfate and the like; peroxide initiators such as benzoyl peroxide, t-butyl hydroperoxide, hydrogen peroxide and the like; substituted ethane initiators such as phenyl-substituted ethane and the like; carbonyl initiator such as aromatic carbonyl compound and the like, and the like. These polymerization initiators are used singly or in combination as appropriate. When emulsion polymerization is performed, a polymerization initiator is combined with a reducing agent to form a redox initiator when desired. As a result, promotion of emulsion polymerization rate and emulsion polymerization at a low temperature are facilitated. Examples of such reducing agent include reducing organic compounds such as ascorbic acid, erythorbic acid, tartaric acid, citric acid, glucose, metal salt such as formaldehyde sulfoxylate and the like, and the like; reducing inorganic compounds such as anthorium thiosulfate, sodium sulfite, sodium bisulfite, sodium metabisulfite and the like; ferrous chloride, rongalit, thioureadioxide and the like.

The composition of the monomer emulsion in the emulsion polymerization for obtaining a (meth)acrylic copolymer emulsion in the present invention is preferably a composition containing 0.1 - 10 parts by weight (preferably 1 - 5 parts by weight) of a surfactant and 30 - 80 parts by weight (preferably 40 - 70 parts by weight) of water per 100 parts by weight of monomer. As used herein, the amounts of "surfactant" and "water" are each a total of the amounts charged in the monomer emulsion to be dropped and the polymerization reaction container, when emulsion polymerization is a monomer emulsion-dropping method.

The (meth)acrylic copolymer emulsion in the present invention may contain additives such as epoxide crosslinking agent, silane coupling agent and the like to improve cohesive force of the (meth)acrylic copolymer particles.

In the present invention, the particle size of the (meth)acrylic copolymer particles is preferably not less than 100 nm, more preferably not less than 120 nm, in the volume-based median diameter (D50) as measured by laser diffraction scattering method. When the median diameter (D50) is not less than 100 nm, positional-adjustment function and the pressure adhesiveness can be simultaneously achieved. From the aspects of cohesiveness of the (meth)acrylic copolymer particles obtained by drying the (meth)acrylic copolymer emulsion, the median diameter (D50) is preferably not more than 300 nm, more preferably not more than 200 nm.

The weight average molecular weight (Mw) of the (meth)acrylic copolymer particles is preferably more than $1.0\times10^4$, more preferably not less than $5.0\times10^4$. It is preferably not more than $1.0\times10^7$, more preferably not more than $5.0\times10^6$. When the weight average molecular weight (Mw) is not more than $1.0\times10^4$, convex part 12 having a sufficiently high elastic modulus tends to be difficult to obtain. When the weight average molecular weight (Mw) exceeds $1.0\times10^7$, elastic modulus becomes high, the convex part tends to be hardly deformed during pressing, and sufficient adhesiveness tends to be hardly obtained.

The weight average molecular weight can be measured by converting substances soluble in ethyl acetate based on polystyrene by GPC method. To be specific, two columns of "TSKgelGMH-H(20)" are connected to "HPLC8020" manufactured by Tosoh Corporation and measurement is performed under the conditions of flow rate 0.5 ml/min in a tetrahydrofuran solvent.

In the adhesive member 1 of the present invention, the projection height of the convex part 12 from a surface (one surface) 11A of the adhesive layer 11 is preferably not less than 1 $\mu$m, more preferably not less than 10 $\mu$m, particularly preferably not less than 20 $\mu$m, from the aspect of stability of the positional-adjustment function of the adhesive member 1, and not more than 100 $\mu$m, more preferably not more than 80 $\mu$m, from the aspects of adhesiveness and adhesive force of the adhesive member 1.

The elastic modulus of the convex part 12 is preferably not less than 5 MPa, more preferably not less than 10 MPa, further preferably not less than 20 MPa. That is, for the convex part 12 to exhibit the positional-adjustment function, it should be free of deformation when it is in contact with the adherend 3, and therefore, it preferably has an elastic modulus of not less than 5 MPa. When the elastic modulus is too high, the convex part itself is not deformed even in the pressed state, and development of the adhesive force becomes difficult. Therefore, the elastic modulus of the convex part 12 is preferably not more than 100 MPa, more preferably not more than 90 MPa. The elastic modulus of the convex part 12 is measured by the below-mentioned method.

In the adhesive member 1 shown in Fig. 1, Fig. 3, the plural convex parts 12 are provided stripe-like on the surface (one surface) of the adhesive layer 11, though they are not particularly limited. The plural convex parts 12 may be formed in a uniform pattern on the whole surface (one surface) of the adhesive layer 11, and may be dot-like, lattice-like, net-like or the like. The "lattice-like" and "net-like" are different in that the "lattice-like" has a pattern of convex part in which the planar shape of the opening portion (the portion where the convex part is not present) is a square or a rectangle, and the "net-like" has a pattern of convex part in which the planar shape of the opening portion (the portion where the convex part is not present) is a shape other than square or rectangle. When the convex part is net-like, the shape of the opening portion (the portion where the convex part is not present) may be entirely the same or different for each opening portion, with preference given to the entirety being the same. Stripe-like pattern is preferable from the aspect of producibility to continuously produce a sheet-like adhesive tape.

When the plural convex parts 12 have a stripe-like pattern, the width of the individual line part (convex part) is preferably 0.1 - 5 mm, more preferably 0.2 - 2 mm. The width of the space part (D in Fig. 3) between adjacent line parts (convex parts) is preferably 0.1 - 5 mm, more preferably 0.2-2 mm. The plural line parts (convex parts) preferably have the same width.

When the plural convex parts 12 have a dot-like pattern, the planar shape of each dot (convex part) may be various shapes such as triangle, rectangle (e.g., square, rectangle, diamond shape, trapozoid etc.), circular shape (e.g., true circle, circle close to true circle, ellipse etc.), oval, regular polygon (square etc.), star shape and the like, and the arrangement form of the dots is not particularly limited, and square matrix, zigzag pattern and the like are preferable. The flat plane area of each dot (convex part 12) is preferably 0.007 - 20 $mm^2$, more preferably 0.2 - 1.8 $mm^2$. The flat plane area of the dot (convex part) may be the same for all dots (convex parts) or difficult for each dot (convex part). Preferably, all dots (convex parts) have the same area. The pitch (distance between center points) between the adjacent dots (convex parts) is preferably 0.1 - 5 mm, more preferably 0.2 - 2 mm.

The flat plane area, width and the like of each convex part 12 refer to the maximum area of the convex part 12 and the maximum width of the convex part 12 when the surface of the adhesive layer 11 is vertically viewed from above the surface of the adhesive layer 11. In addition, the tip of the convex part 12 to be in contact with the adherend 3 may be a flat surface or a non-flat surface.

The occupancy rate of the convex parts 12 on the surface of the adhesive layer 11 ([total area of convex parts 12/total area of surface of adhesive layer]$\times$100(%)) is preferably 30 - 95%, more preferably 40 - 90%, from the aspects of the adhesiveness and the low friction of the adhesive member 1 (that is, easy mobility on the adherend).

[Adhesive layer]

In the pressure-bonding adhesive member of the present invention, the adhesive layer 11 in which the convex parts 12 are formed on one surface thereof is a pressure-sensitive adhesive layer containing a pressure-sensitive adhesive as a main component. The pressure-sensitive adhesive (hereinafter to be simply abbreviated as "adhesive") is not particularly limited and, for example, rubber adhesive, acrylic adhesive, polyamide adhesive, silicone adhesive, polyester adhesive, ethylene-vinyl acetate copolymer adhesive, urethane adhesive and the like can be mentioned based on the kind of the base polymer constituting the adhesive. It can be appropriately selected from these known adhesives. Of these, acrylic adhesives are superior in various properties such as heat resistance, weatherability and the like, and a desired property can be expressed by selecting the kind and the like of the monomer unit constituting the acrylic polymer. Thus, they can be used preferably.

Acrylic adhesives are generally formed from an acrylic polymer constituted of alkyl (meth)acrylate as a main monomer unit. Examples of alkyl (meth)acrylate include $C_{1-20}$ alkyl (meth)acrylate (preferably $C_{2-12}$ alkyl (meth) acrylate, further preferably $C_{1-8}$ alkyl (meth)acrylate) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, octadecyl (meth)acrylate, nonadecyl (meth)acrylate, eicosyl (meth)acrylate and the like, and the like. One or more kinds of alkyl (meth)acrylates can be selected and used.

Where necessary, an acrylic polymer may contain other monomer unit copolymerizable with alkyl (meth)acrylate with the aim to improve cohesive force, heat resistance, crosslinking property and the like. Examples of such monomer unit include carboxyl group-containing monomers such as acrylic acid, methacrylic acid, carboxyethyl acrylate, carboxypentyl acrylate, itaconic acid, maleic acid, fumaric acid, crotonic acid and the like; hydroxyl group-containing monomers such as hydroxybutyl (meth)acrylate, hydroxyhexyl (meth)acrylate, hydroxyoctyl (meth)acrylate, hydroxydecyl (meth)acrylate, hydroxylauryl (meth)acrylate, (4-hydroxymethylcyclohexyl)methyl methacrylate and the like; sulfonic acid group-containing monomers such as styrene sulfonic acid, ally sulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid and the like; phosphate group-containing monomers such as 2-hydroxyethylacryloyl phosphate and the like; (N-substituted)amide monomers such as (meth)acrylamide, N,N-dimethyl(meth)acrylamide, N-butyl(meth)acrylamide, N-methylol(meth)acrylamide, N-methylolpropane(meth)acrylamide and the like; aminoalkyl (meth)acrylate monomers such as aminoethyl (meth)acrylate, N,N-dimethylaminoethyl (meth)acrylate, t-butylaminoethyl (meth)acrylate and the like; alkoxyalkyl (meth)acrylate monomers; maleimide monomers such as N-cyclohexylmaleimide, N-isopropylmaleimide, N-laurylmaleimide, N-phenylmaleimide and the like; itaconimide monomers such as N-methylitaconimide, N-ethylitaconimide, N-butylitaconimide, N-octylitaconimide, N-2-ethylhexylitaconimide, N-cyclohexylitaconimide, N-laurylitaconimide and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide and the like; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, N-vinylcaprolactam and the like; cyanoacrylate monomers such as acrylonitrile, methacrylonitrile and the like; epoxy group-containing acrylic monomers such as glycidyl (meth)acrylate and the like; glycol acrylate monomers such as polypropylene glycol (meth)acrylate, methoxyethylglycol (meth)acrylate, methoxypolypropylene glycol (meth)acrylate and the like; acrylate monomers having a heterocycle, a halogen atom, a silicon atom or the like such as tetrahydrofurfuryl (meth)acrylate, fluorine (meth)acrylate, silicone (meth)acrylate and the like; multifunctional monomers such as hexanediol di(meth)acrylate, (poly)ethylene glycol di(meth)acrylate, polypropylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate, hexyl di(meth)acrylate and the like; olefin monomers such as isoprene, dibutadiene, isobutylene and the like; vinyl ether monomers such as vinyl ether and the like, and the like. One or more kinds of these monomer units can be used.

Acrylic copolymer can be produced by subjecting the aforementioned alkyl (meth)acrylate and other monomer as necessary to polymerization by a known appropriate method. The molecular weight and the like of the acrylic copolymer are not particularly limited and, for example, one having a weight average molecular weight of 100000 - 2000000, preferably 150000 - 1000000, further preferably 300000 - 1000000 can be used.

The adhesive may be a hydrophilic adhesive using a polymer having an acidic group such as carboxyl group and the like as a base polymer and having hydrophilicity imparted by entirely or partially neutralizing the acidic group in the base polymer by adding a neutralizing agent. Hydrophilic adhesive generally causes less adhesive residue on the adherend and even when an adhesive residue is produced, it can be removed with ease by washing with pure water. The polymer having an acidic group can be obtained by copolymerizing a monomer having an acidic group such as the aforementioned carboxyl group-containing monomer and the like during preparation of the base polymer. Examples of the neutralizing agent include organic amino compounds with alkalinity such as primary amine (e.g., monoethylamine, monoethanolamine and the like), secondary amine (e.g., diethylamine, diethanolamine and the like), tertiary amine (e.g., triethylamine, triethanolamine, N,N,N'-trimethylethylenediamine, N-methyldiethanolamine, N,N-diethylhydroxylamine and the like), and the like.

The adhesive may contain a crosslinking agent as necessary. As the crosslinking agent, crosslinking agents such as epoxy crosslinking agent, isocyanate crosslinking agent, melamine crosslinking agent, peroxide crosslinking agent, metal alkoxide crosslinking agent, metal chelate crosslinking agent, metal salt crosslinking agent, carbodiimide crosslinking agent, oxazoline crosslinking agent, aziridine crosslinking agent, amine crosslinking agent and the like can be used, and epoxy crosslinking agent, isocyanate crosslinking agent and the like can be preferably used. These may be used alone or two or more kinds thereof may be used in combination.

Examples of the epoxy crosslinking agent include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentylglycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, diglycidyl adipate, diglycidyl o-phthalate, triglycidyl-tris(2-hydroxyethyl)isocyanurate, resorcin diglycidyl ether, bisphenol S diglycidyl ether, epoxy resin containing two or more epoxy groups in a molecule and the like.

Examples of the isocyanate crosslinking agent include lower aliphatic polyisocyanates such as 1,2-ethylene diisocyanate, 1,4-butylene diisocyanate, 1,6-hexamethylene diisocyanate and the like; aliphatic polyisocyanates such as cyclopentylene diisocyanate, cyclohexylene diisocyanate, isophorone diisocyanate, hydrogenated tolylene diisocyanate, hydrogenated xylene diisocyanate and the like; aromatic polyisocyanates such as 2,4-tolylene diisocyanate, 2,6-tolylene diisocyanate, 4,4'-diphenylmethane diisocyanate, xylylene diisocyanate and the like, and the like.

The adhesive layer 11 may contain additives such as plasticizer, stabilizer, filler lubricant, colorant, ultraviolet absorber, antioxidant, colorant and the like.

In the present invention, the elastic modulus of the adhesive layer 11 is preferably lower than the elastic modulus of the convex part 12. As mentioned above, the adhesive member 1 in the present invention has a constituent in which the convex parts 12 are embedded in the adhesive layer 11 upon press, and the adhesive layer 11 contacts the adherend 3 to express a high adhesive force. When the elastic modulus of the adhesive layer 11 is lower than the elastic modulus of the convex part 12, the convex parts 12 are quickly embedded in the adhesive layer 11 by pressurization, the contact area of the adhesive layer 11 to the adherend 3 increases, and a high adhesive force can be obtained certainly.

While the thickness of the adhesive layer 11 is not particularly limited, it is preferably 10 - 1000 μm, more preferably 50 - 500 μm, particularly preferably 70 - 250 μm. When the thickness of the adhesive layer is within the above-mentioned preferable range, the adhesive member after positional adjustment can be adhered to the adherend by pressure bonding with a sufficient adhesive force while maintaining the positional-adjustment function of the convex part 12. A ratio of the thickness of the adhesive layer 11 to the height of the convex part 12 (thickness of adhesive layer/height of convex part) is preferably not less than 1.0. When the ratio of the thickness of the adhesive layer 11 to the height of the convex part 12 (thickness of adhesive layer/height of convex part) is less than 1.0, the tip of the convex part 12 may remain protruded from the surface of the adhesive layer 11 even when the adhesive layer 11 is deformed by pressurization, and sufficiently high adhesive force to the adherend 3 may not be obtained. The ratio of the thickness of the adhesive layer 11 to the height of the convex part 12 (thickness of adhesive layer/height of convex part) is more preferably not less than 1.5, particularly preferably not less than 2.0.

The adhesive layer 13 provided on one surface of the support 10 on the side opposite to the side in contact with the adhesive layer 11 is a pressure-sensitive adhesive layer, and a known pressure-sensitive adhesive such as rubber adhesive, acrylic adhesive, polyamide adhesive, silicone adhesive, polyester adhesive, ethylene-vinyl acetate copolymer adhesive, urethane adhesive or the like, which is suitable according to the material of a patch to be adhered to this layer, is applied to the adhesive layer 13. The thickness of the adhesive layer 13 is also determined as appropriate according to the material of a patch to be adhered to this layer. Generally, it is selected from the range of 10 - 200 μm.

[Separator]

The pressure-bonding adhesive member of the present invention generally has a separator 2 to protect the surface having the plural convex parts 12 of the adhesive layer 11 until use, as shown in Fig. 6.

The separator 2 having a compressive elastic modulus of 1 MPa or below is used. That is, the separator 2 is provided with not less than a certain level of cushioning property. The separator 2 has cushioning property corresponding to a compressive elastic modulus of not more than 1 MPa. Thus, even when the separator 2 is wound together with the adhesive member 1 and stored as rolls and the pressure due to the winding tightening is applied to the adhesive member 1, the concentration of stress to the convex parts 12 formed on the surface of the adhesive layer 11 is reduced by the separator 2. Therefore, crushing of the convex part 12 and embedding thereof in the adhesive layer 11 to markedly decrease the protrusion height of the convex part 12 can be prevented.

The shape of the pressure-bonding adhesive member of the present invention includes various shapes such as tape, sheet, panel, label, any other processed shape other than these and the like.

The measurement methods of the physical properties and characteristic properties in the present invention are as described below.

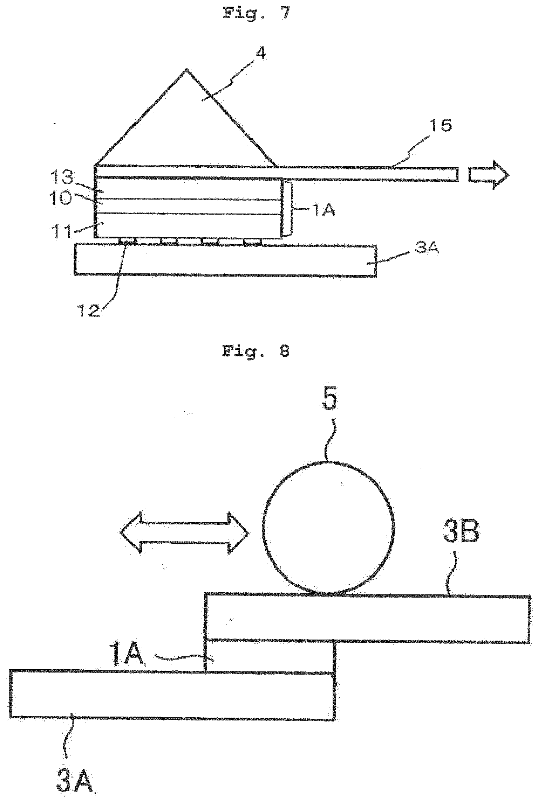

1. Frictional force of adhesive member 1 on polypropylene plate (Fig. 7)

A method of measuring the frictional force of the adhesive member on a polypropylene plate is described with reference to Fig. 7.

A measurement sample 1A obtained by cutting an adhesive member 1 into a square with a planar shape of 2 cm x 2 cm is placed on a PP plate 3A such that the surface on which convex parts are formed is in contact with the PP plate 3A.

Then, one end of a PET substrate (width 2 cmxlength 10 cm, thickness:38 μm) 15 is fixed via an adhesive layer 13 on the back face side of the measurement sample 1A such that the terminal part is identical with the terminal part of the sample 1A.

An anchor 4 of 50 g is placed on the PET substrate 15 so that a load will be applied substantially equally onto the entire sample 1A, the other end of the PET substrate 15 is held and the PET substrate 15 is pulled in the horizontal direction at a rate of 300 mm/min, and the stress (N/cm$^2$) applied at that time is measured and used as a frictional force.

When the adhesive member 1 to be measured is of a one surface adhesive layer type (back face is substrate), PET substrate 15 is fixed on the back face of the measurement sample 1A via a separately-prepared double-sided adhesive tape.

2. Shear adhesive force of adhesive member 1 to polypropylene plate (Fig. 8)

A method of measuring the shear adhesive force of the adhesive member is described with reference to Fig. 8.

The shear adhesive force of the adhesive member 1 is measured by a method according to JIS K 6850.
A measurement sample 1A obtained by cutting the adhesive member 1 into a square having a planar shape of 2 cm × 2 cm is sandwiched between two PP plates 3A and 3B (width 3 cmxlength 5 cm×thickness 2 mm), and pressed with a load of one reciprocation of the 2 kg roller 5.
This is stood at room temperature (23°C) for one day, the two PP plates are pulled in the horizontal direction (left and right directions) at a tension rate of 50 mm/min, and the stress ($N/cm^2$) applied at that time is measured.

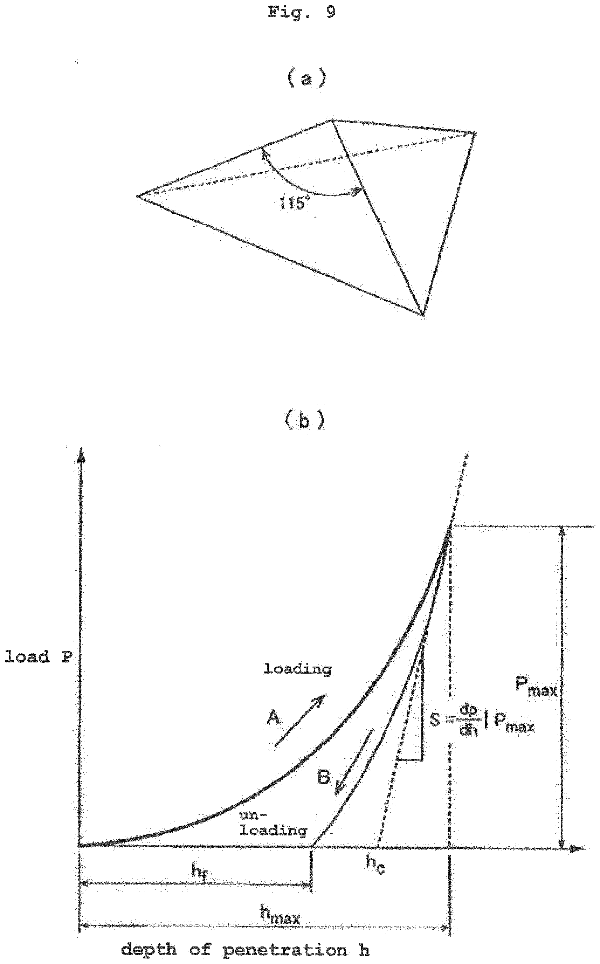

3. Elastic modulus of adhesive layer 11 and convex part 12 (Fig. 9)

A method of measuring the elastic modulus of adhesive layer 11 and convex part 12 is explained by referring to Fig. 9.
The elastic modulus here is a composite elastic modulus obtained by a nano indentation test using a nano indenter "TriboScope" manufactured by HYSITRON. The nano indentation test is a test for measuring elastic properties of a test sample from the relationship between load P and depth of penetration h of the indenter, which is obtained in the process of gradually pushing a Berkovich indenter (triangular pyramidal diamond indenter) into the test sample until a predetermined maximum load Pmax is reached by applying a load P (hereinafter loading process), the process of retaining the maximum load Pmax for a given time (hereinafter retaining process), and the process of, after retaining, gradually unloading and withdrawing until the load P becomes 0 (hereinafter unloading process). The depth of penetration h means a distance between the tip of the indenter and the surface of a test material in an initial state (surface of test material before pushing in the indenter), and corresponds to the amount of displacement of the indenter from the position of initial contact of the indenter with the surface of the test material.
The elastic modulus of the convex part 12 and the adhesive layer 11 can be calculated from the following formula (1) based on the relationship between load P and depth of penetration h of the indenter which is obtained by the above-mentioned nano indentation test.

$$Er=1/\beta \cdot S/2 \cdot (\pi/A)1/2 \quad (1)$$

In the above-mentioned formula (1), Er is elastic modulus, β is constant determined by indenter shape, and β=1.034 is used for Berkovich indenter. S is contact rigidity modulus, n is circular constant, and A is contact projection area of indenter and surface of the test material.
The elastic modulus of an adhesive layer can be measured by contacting the indenter with the surface of an adhesive layer of the test material (adhesive tape). The elastic modulus of the convex part is measured by, for example, cutting out a convex part alone on the adhesive tape from the adhesive layer in an environment of -100°C or below by using an ultramicrotome equipped with a diamond blade to remove an influence of the adhesive layer, fixing same on a given sample table (made of SUS), and contacting the indenter on the surface of the convex part.

(Contact rigidity modulus)

The above-mentioned contact rigidity modulus S is calculated based on the relationship between load P and depth of penetration h of the indenter, which is obtained in the above-mentioned nano indentation test, particularly, the relationship obtained in the unloading process. In a more specific explanation, contact rigidity modulus S is defined by the slope of an unloading curve immediately after transition to the unloading process, after the position of the indenter reached the maximum depth of penetration hmax (depth of penetration when maximum load Pmax is applied) and after the retaining process. In other words, the contact rigidity modulus S means the gradient (dP/dh) of the tangent line L to the unloading curve at a point (hmax, Pmax).

(Contact projection area)

The above-mentioned contact projection area A means the area obtained by projecting the area of contact part between the indenter and the surface of a test material when the position of the indenter reached the maximum depth of penetration hmax, in the pushing-in direction of the indenter. When the depth of the contact part (contact depth) is hc, the contact projection area A can be approximated by the following formula (2) in the case of Berkovich indenter.

$$A=24.56 \cdot hc^2 \quad (2)$$

The above-mentioned contact depth hc is shown by the following formula (3) and using maximum depth of penetration hmax, maximum load Pmax and contact rigidity modulus S.

$$hc=hmax-0.75\cdot Pmax/S \quad (3)$$

In the nano indentation test in the present invention, measurement and analysis of elastic modulus are performed using measurement-analysis software TriboScan Ver.8.0.0.4 manufactured by Hysitron.

(Measurement conditions)

penetration rate in loading-unloading processes 200 μN/sec
retention time 15 sec
maximum depth of penetration (depth of penetration on transition to unloading process) 0.9 - 5 μm

[Examples]

The present invention is described in more detail in the following by showing Examples and Comparative Examples.

<Example 1>

1. Production of core-shell copolymer particles

(Preparation of monomer emulsion (A))

2-Ethylhexyl acrylate (2-EHA) (950 parts by weight), acrylic acid (AA) (50 parts by weight), LATEMUL E-118B (manufactured by Kao Corporation) (15 parts by weight) which is a sodium polyoxyethylene alkyl ether sulfate anionic unreactive surfactant, and ion-exchanged water (970 parts by weight) were charged in a container, and the mixture was stirred using a homomixer (manufactured by Tokushu Kika Kogyo Co., Ltd.) under a nitrogen atmosphere for 5 min at 6000 rpm to give a monomer emulsion (A).

(Preparation of monomer emulsion (B))

A mixture of methyl methacrylate (MMA) (950 parts by weight), acrylic acid (AA) (50 parts by weight), LATEMUL E-118B (manufactured by Kao Corporation) (15 parts by weight) and ion-exchanged water (970 parts by weight) was charged in a container, and the mixture was stirred using a homomixer (manufactured by Tokushu Kika Kogyo Co., Ltd.) under a nitrogen atmosphere for 5 min at 6000 rpm to give a monomer emulsion (B).

(Polymerization)

LATEMUL E-118B (manufactured by Kao Corporation) (1.6 parts by weight) and ion-exchanged water (342.2 parts by weight) were charged in a reaction container equipped with a cooling tube, a nitrogen inlet tube, a thermometer, dropping facility, and a stirring blade, sufficiently purged with nitrogen while stirring, and the reaction mixture was heated to 60°C. After confirmation that it became constant at 60°C, a water-soluble azo polymerization initiator, VA-057 (manufactured by Wako Pure Chemical Industries, Ltd.) (0.323 parts by weight) was added and, 10 min later, monomer emulsion (A) (520 parts by weight) was added dropwise over 2 and half hr to give a copolymer to be the core layer. Then, VA-057 (0.323 parts by weight) was further added and, 10 min later, the monomer emulsion (B) was added dropwise over 45 min to form a copolymer to be the shell layer, whereby a core-shell copolymer emulsion was obtained. The weight average molecular weight of the core-shell copolymer particles was $2.0\times10^5$ and the average particle size (D50) was 0.16 μm.

2. Preparation of liquid for convex part formation

A polymerized rosin ester ("E-865-NT" manufactured by Arakawa Chemical Industries, Ltd.) (20 parts by weight) as a tackifier was added per 100 parts by weight of the core-shell copolymer emulsion produced in the above-mentioned 1. The mixture was stirred at room temperature for 30 min to give a liquid for convex part formation.

3. Preparation of pressure-bonding adhesive member

A double-sided adhesive tape ("TW-Y01" manufactured by Nitto Denko Corporation, tape in which acrylic adhesive layer is formed on both surfaces of non-woven fabric substrate, thickness of whole tape 170 μm, thickness of adhesive layer on one surface 70 μm, thickness of adhesive layer on the other one surface 70 μm) was prepared.

On the surface of the adhesive layer (thickness 70 μm) on one surface of the double-sided adhesive tape was discharged the liquid for convex part formation prepared in the above-mentioned 2., by using MEASURINGMASTER MPP-1 manufactured by Musashi Engineering, Inc. under the conditions of discharge rate: 0.00060 ml/s, actual discharge time: 0.16 s to form at 2 mm space a stripe-like convex part pattern with width 0.3 mm, projection height 25 μm. The needle used was soft needle 20G. Drying at temperature 100°C for 3 min gave a pressure-bonding adhesive member having stripe-like convex parts on one surface of the adhesive layer.

<Examples 2 - 5>

Pressure-bonding adhesive members were prepared in the same manner as in Example 1 except that the tackifier was changed to those described in Table 1.

<Example 6>

A pressure-bonding adhesive member was prepared in the same manner as in Example 1 except that, in the production of core-shell copolymer particles, a sodium alkylallyl sulfosuccinate salt anionic reactive surfactant, ELEMINOL JS-20 (manufactured by Sanyo Chemical Industries, Ltd.), was used instead of a sodium polyoxyethylene alkyl ether sulfate anionic unreactive surfactant, LATEMUL E-118B. The core-shell copolymer particle had a weight average molecular weight of $8.0\times10^5$, and an average particle size (D50) of 0.12 μm.

<Example 7>

A pressure-bonding adhesive member was prepared in the same manner as in Example 6 except that the tackifier was changed to one described in Table 1.

<Example 8>

A pressure-bonding adhesive member was prepared in the same manner as in Example 7 except that of the amount of the tackifier to be added was changed to 10 parts by weight.

<Comparative Example 1>

Using the core-shell copolymer emulsion produced in Example 1 as it is as a liquid for convex part formation, and in the same manner as in Example 1 as for the rest, a pressure-bonding adhesive member was prepared.

<Comparative Example 2>

A pressure-bonding adhesive member was prepared in the same manner as in Example 1 except that the tackifier was changed to one described in Table 2.

<Comparative Example 3>

Using the core-shell copolymer emulsion produced in Example 6 as it is as a liquid for convex part formation, and in the same manner as in Example 1 as for the rest, a pressure-bonding adhesive member was prepared.

<Comparative Example 4>

Adding the tackifier described in Table 2 to the core-shell copolymer emulsion produced in Example 6 to give a liquid for convex part formation and in the same manner as in Example 1 as for the rest, a pressure-bonding adhesive member was prepared.

All the tackifiers used in Examples 2 - 8, and Comparative Examples 2 and 4 were commercially available products manufactured by Arakawa Chemical Industries, Ltd.

The measurement results of the physical properties and characteristic properties of the pressure-bonding adhesive members of Examples and Comparative Examples are shown in Table 1 and Table 2.

In Table 1 and Table 2, "95/5" and "80/20" show weight ratios, and "phr" in the amount of tackifier to be added shows the amount (parts by weight) of tackifier per 100 parts by weight of core-shell copolymer particles in a core-shell copolymer emulsion.

[Table 1]

| | | | Example 1 | Example 2 | Example 3 | Example 4 | Example 5 | Example 6 | Example 7 | Example 8 |
|---|---|---|---|---|---|---|---|---|---|---|
| adhesive layer | material (composition) | | (Nitto) TW-Y01 | ← | ← | ← | ← | ← | ← | ← |
| | thickness (μm) of one surface | | 70 | ← | ← | ← | ← | ← | ← | ← |
| convex part | emulsion | core | 2EHA/AA=95/5 | ← | ← | ← | ← | ← | ← | ← |
| | | shell | MMA/AA=95/5 | ← | ← | ← | ← | ← | ← | ← |
| | | core/shell ratio | 80/20 | ← | ← | ← | ← | ← | ← | ← |
| | | emulsifier | unreactive | ← | ← | ← | ← | reactive | ← | ← |
| | tackifier | product name | E-865-NT | E-900-NT | E-625-NT | NS-100H | NS-121 | E-865-NT | NS-100H | ← |
| | | kind | polymerized rosin ester | ← | ← | rosin ester | acid-modified rosin ester | polymerized rosin ester | rosin ester | ← |
| | | softening temperature | 160°C | ← | 125°C | 100°C | 121°C | 160°C | 100°C | 100°C |
| | | amount to be added | 20phr | ← | ← | ← | ← | ← | ← | 10phr |
| | projection height (μm) | | 25 | ← | ← | ← | ← | ← | ← | ← |
| | elastic modulus (MPa) | | 46.8 | 66.4 | 39.5 | 42.2 | 23.3 | 79.5 | 47.2 | 43.1 |
| frictional force (on PP plate) (N/cm$^2$) | | | 0.32 | 0.36 | 0.38 | 0.38 | 0.40 | 0.33 | 0.44 | 0.53 |
| shear adhesive force (to PP plate) (N /cm$^2$) | | | 57 | 53 | 57 | 51 | 52 | 76 | 73 | 68 |

[Table 2]

| | | | Comparative Example 1 | Comparative Example 2 | Comparative Example 3 | Comparative Example 4 |
|---|---|---|---|---|---|---|
| adhesive layer | material (composition) | | (Nitto) TW-Y01 | ← | ← | ← |
| | thickness (μm) of one surface | | 70 | ← | ← | ← |
| convex part | emulsion | core | 2EHA/AA=95/5 | ← | ← | ← |
| | | shell | MMA/AA=95/5 | ← | ← | ← |
| | | core/shell ratio | 80/20 | ← | ← | ← |
| | | emulsifier | unreactive | ← | reactive | ← |
| | tackifier | product name | - | SE-A-18 | - | SE-A-18 |
| | | kind | - | disproportionated rosin ester | - | disproportionated rosin ester |
| | | softening temperature | - | liquid | - | liquid |
| | | amount to be added | 0 | 20phr | 0 | 20phr |
| | projection height (μm) | | 25 | ← | ← | ← |
| | elastic modulus (MPa) | | 37.2 | 21.3 | 40.2 | 14.3 |
| frictional force (on PP plate) ($N/cm^2$) | | | 0.41 | 0.49 | 0.75 | unmeasurable |
| shear adhesive force (to PP plate) ($N/cm^2$) | | | 45 | 47 | 67 | 65 |

[Industrial Applicability]

The pressure-bonding adhesive member of the present invention has a superior positional-adjustment function relative to an adherend having a surface mainly composed of low-polarity plastic typified by polypropylene, and can adhere to the adherend after positional adjustment with a sufficiently high adhesive force. Therefore, positioning and adhesion on the surface of an adherend can be performed efficiently and highly accurately. For example, it can be used as an exterior or interior building material by applying a design on the back face of a pressure-bonding adhesive member or the back face thereof can be used as an adhesive face for adhering an exterior or interior material when applying an exterior or interior building material (decorative laminate, wall paper, flooring material, carpet, ceiling material, base board, cushion floor, straw mat, sash etc.).

[Explanation of Symbols]

1 pressure-bonding adhesive member
10 support
11 adhesive layer
11A, 11B one surface of adhesive layer
12 convex part
13 adhesive layer

This application is based on a patent application No. 2016-103630 filed in Japan, the contents of which are incorporated in full herein.

## Claims

1. A pressure-bonding adhesive member comprising an adhesive layer and plural convex parts formed on one surface of the adhesive layer, wherein
when the convex parts are in contact with a polypropylene plate and the adhesive layer is not in contact with the polypropylene plate, the adhesive member shows a frictional force of not more than 0.6N/cm$^2$ on the polypropylene plate and a shear adhesive force of not less than 50N/cm$^2$ to the polypropylene plate.

2. The pressure-bonding adhesive member according to claim 1, wherein the convex part comprises a (meth)acrylic copolymer particle and a tackifier.

3. The pressure-bonding adhesive member according to claim 2, wherein the tackifier comprises a rosin tackifier.

4. The pressure-bonding adhesive member according to claim 2 or 3, wherein the tackifier is solid at ordinary temperature.

5. The pressure-bonding adhesive member according to claim 4, wherein the tackifier has a softening temperature of not less than 40°C.

6. The pressure-bonding adhesive member according to any one of claims 2 to 5, wherein the (meth)acrylic copolymer particle is a core-shell (meth)acrylic copolymer particle comprising a core and a shell having a higher elastic modulus than that of the core.

7. The pressure-bonding adhesive member according to claim 6, wherein the core is a (meth)acrylic copolymer comprising an alkyl acrylate wherein the alkyl group is a $C_{6-10}$ alkyl group as a main monomer unit.

Fig. 1

1
12
11A
11
11B
10
13

Fig. 2

(A)
(B)
(C)
1
13
10
11
12
3

Fig. 3

D
11A
1
12

Fig. 4

12
20

Fig. 5

22
20
21

Fig. 6

1
13
10
11
12
2

Fig. 7

4
15
13
10
1A
11
3A
12

Fig. 8

5
3B
1A
3A

Fig. 9

(a)

115°

(b)

load P
loading
A
B
un-
loading
$P_{max}$
$S = \frac{dp}{dh} | P_{max}$
$h_f$
$h_c$
$h_{max}$
depth of penetration h

**INTERNATIONAL SEARCH REPORT**

International application No. PCT/JP2017/015209

A. CLASSIFICATION OF SUBJECT MATTER

*C09J7/02*(2006.01)i, *B32B27/00*(2006.01)i, *C09J11/06*(2006.01)i, *C09J11/08*(2006.01)i, *C09J201/00*(2006.01)i

According to International Patent Classification (IPC) or to both national classification and IPC

B. FIELDS SEARCHED

Minimum documentation searched (classification system followed by classification symbols)
C09J1/00-201/10, B32B27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-295857 A (Nitto Denko Corp.), 12 November 1996 (12.11.1996), claims; examples (Family: none) | 1-7 |
| A | JP 2004-346302 A (Nitto Denko Corp.), 09 December 2004 (09.12.2004), claims; examples & US 2004/0213942 A1 claims; examples & EP 1471126 A2 & CN 1570003 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 May 2017 (17.05.17) | 13 June 2017 (13.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/015209

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-500514 A (Minnesota Mining and Manufacturing Co.), 18 January 2000 (18.01.2000), claims; examples & US 5795636 A claims; examples & WO 1997/018276 A1 & EP 861307 A1 & CN 1202194 A | 1-7 |
| A | JP 3-181578 A (Minnesota Mining and Manufacturing Co.), 07 August 1991 (07.08.1991), claims; examples & US 5141790 A claims; examples & EP 429269 A1 | 1-7 |
| A | US 6083616 A (SEAL PRODUCTS, INC.), 04 July 2000 (04.07.2000), claims & WO 1999/015600 A1 & EP 1023415 A1 | 1-7 |
| A | JP 6-172725 A (Mitsui Toatsu Chemicals, Inc.), 21 June 1994 (21.06.1994), claims; examples (Family: none) | 1-7 |
| A | JP 7-310057 A (Nitto Denko Corp.), 28 November 1995 (28.11.1995), claims; examples (Family: none) | 1-7 |
| A | JP 2010-215900 A (Koyo Sangyo Co., Ltd.), 30 September 2010 (30.09.2010), claims; examples (Family: none) | 1-7 |
| A | JP 8-325536 A (Nippon Carbide Industries Co., Inc.), 10 December 1996 (10.12.1996), claims; examples (Family: none) | 1-7 |
| A | JP 2001-279199 A (Sekisui Chemical Co., Ltd.), 10 October 2001 (10.10.2001), claims; examples (Family: none) | 1-7 |
| A | JP 2002-012629 A (Sekisui Chemical Co., Ltd.), 15 January 2002 (15.01.2002), claims; examples (Family: none) | 1-7 |

Form PCT/ISA/210 (continuation of second sheet) (January 2015)

**INTERNATIONAL SEARCH REPORT**

International application No.
PCT/JP2017/015209

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-167557 A (Sekisui Chemical Co., Ltd.), 11 June 2002 (11.06.2002), claims; examples (Family: none) | 1-7 |
| P,A | WO 2016/143731 A1 (Nitto Denko Corp.), 15 September 2016 (15.09.2016), claims; examples & TW 201632348 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1118584 A
- JP 2010215900 A
- JP 2001279200 A
- JP 2016103630 A

### Non-patent literature cited in the description

- **R.T. FEDORS.** *Polymer Engineering and Science,* 1974, vol. 14, 147